# EUROPÄISCHE PATENTSCHRIFT

(11) **EP 2 054 289 B1**
(45) Veröffentlichungstag und Bekanntmachung des Hinweises auf die Patenterteilung: **06.07.2011**
(21) Anmeldenummer: 07801995.7
(22) Anmeldetag: 23.08.2007
(51) Int. Cl.: B62D 21/15, B62D 25/14

(54) **FAHRZEUG MIT EINER GEGEN EINEN SEITENAUFPRALL AUSGELEGTEN INSTRUMENTENTAFEL**
VEHICLE WITH AN INSTRUMENT PANEL DESIGNED FOR A SIDE IMPACT
VEHICULE AVEC UNE PLANCHE DE BORD CONÇUE A L'EPREUVE D'UN CHOC LATERAL

(30) Priorität: 23.08.2006 DE 102006040032
(43) Veröffentlichungstag der Anmeldung: 06.05.2009
(73) Patentinhaber: Faurecia Innenraum Systeme GmbH, 76767 Hagenbach (DE)
(72) Erfinder: STEVE, Kober, 08233 Treuen (DE); BRAUN, Marco, 76848 Lug (DE); GAVRILOV, Christo, 81243 München (DE)
(74) Vertreter: Pfenning, Meinig & Partner GbR
(86) Internationale Anmeldenummer: PCT/EP2007/007574
(87) Internationale Veröffentlichungsnummer: WO 2008/022810

(56) Entgegenhaltungen:
- DE-A1- 10 021 140
- DE-A1-102004 059 215
- FR-A- 2 669 885

## Beschreibung

Üblicherweise weisen Fahrzeuge, insbesondere Automobile, eine Fahrzeugkarosserie mit einer A- und B-Säule auf, die die Fahrgastzelle im Falle eines Seitenaufpralles vor zu starker Deformation schützen.

Der Bereich zwischen den A- und B-Säulen ist jedoch in vielen Fahrzeugen relativ schwach ausgebildet: Besonders in diesem Bereich besteht die Gefahr einer starken Verformung und damit einer Gefährdung von Fahrzeuginsassen.

Aus der Druckschrift DE 196 33 162 ist bekannt, zur zusätzlichen Versteifung der Fahrgastzelle eine sich zwischen den A-Säulen befindende Instrumententafel mit einer Verstärkung zu versehen. In diesem Falle ist die Verstärkung eine ein Trägerteil der Instrumententafel bildende Rippen- oder Wellenstruktur, welche angeordnet zwischen den A-Säulen sich quer zur Fahrzeuglängsrichtung erstreckt. Durch den Verlauf der Rippenstruktur wird der Bereich zwischen den A-Säulen gegen einen Seitenaufprall versteift.

Nachteil dieser Lösung ist, dass die Fahrzeugkarosserie zwar gegen einen Seitenaufprall versteift ist, diese Versteifung aber nur (von der Fahrzeugvorderseite ausgehend) bis zum Bereich der A-Säule reicht. Der Bereich der Fahrgastzelle, welcher vor den A-Säulen liegt, insbesondere der Bereich zwischen A- und B-Säulen, wird durch die Verstärkung nur indirekt versteift, weswegen in diesem Bereich noch hohe Deformationen der Fahrgastzelle möglich sind.

Die DE 10 2004 059 215 A1 offenbart eine vordere Kraftfahrzeugtür, die zu einem verbesserten Insassenschutz insbesondere im Hinblick auf einen Seitenaufprall beitragen soll, wobei im Bereich und in Höhe einer sich in Fahrzeugrichtung erstreckenden Instrumententafel zur Ausbildung eines weiteren Kraftpfades von der Fahrzeugtür in die Fahrzeugkarosserie zwischen dem Türinnenblech und der Türinnenverkleidung ein erstes Kraftübertragungselement fest angeordnet ist, welchem ein benachbartes und innerhalb der Instrumententafel angeordnetes sowie an derselben und/oder an einem tragenden Bauteil der Kraftfahrzeugkarosserie sich abstützendes zweites Kraftübertragungselement zugeordnet ist.

In der in dieser Druckschrift offenbarten Lehre wird von einem sich zwischen zwei A-Säulen befestigten Querträger ausgegangen. Das Kraftübertragungselement wird an diesem Querträger abgestützt und befindet sich damit weit hinter der Oberfläche der Instrumententafel. Diese Anordnung erfordert eine sehr massive Befestigung des Elementes, da der Kraftpfad nicht gerade ist und die Gefahr besteht, dass das Element im Falle eines Seitenaufpralles wegknickt ohne die Kräfte an den Querträger weiterzuleiten.

Aufgabe der vorliegenden Erfindung ist es somit ein Fahrzeug zu schaffen, bei dem eine zugehörige Fahrgastzelle insbesondere im Bereich zwischen A- und B-Säulen gegen Deformationen, insbesondere gegen durch einen Seitenaufprall verursachte Deformationen, auf möglichst effektive Weise zusätzlich stabilisiert ist.

Diese Aufgabe wird durch ein Fahrzeug nach dem unabhängigen Anspruch gelöst.

Die Erfindung schafft ein Fahrzeug, enthaltend eine Fahrzeugkarosserie mit zwei A-Säulen und zwei B-Säulen, die einen Fahrzeuginnenraum begrenzen, und eine zwischen den A-Säulen im Innenraum angeordnete Instrumententafel, wobei die Instrumententafel eine Instrumententafelverstärkung aufweist, wobei die Instrumententafelverstärkung zumindest einen ersten und/oder einen zweiten Abschnitt aufweist, und der erste und/oder zweite Abschnitt jeweils an der Außenseite der Instrumententafel beginnend sich zumindest über einen Teil der Instrumententafel quer zur Fahrzeugslängsrichtung erstreckt zum Versteifen der Instrumententafel gegen eine an den Außenseiten der Instrumententafel angreifenden hohen Kraft, beispielsweise gegen eine Kraft, die durch einen Seitenaufprall erzeugt wird, wobei die Kontur der Instrumententafel einschließlich der Instrumententafelverstärkung zumindest im Bereich der jeweiligen Außenseite der Instrumententafel zumindest teilweise auf einer Höhe zwischen den A-Säulen und den B-Säulen liegt, wobei die Instrumententafelverstärkung in dem Bereich der Kontur der Instrumententafel angeordnet ist, der am weitesten Richtung B-Säulen in den Fahrzeuginnenraum hineinragt.

Die erfindungsgemäße Vorrichtung bzw. die erfindungsgemäße verstärkte Instrumententafel hat den großen Vorteil, dass diese sich in ihren tragenden Teilen auch als "integrales" Konzept verwirklichen lässt. Das heißt, dass sich die Verstärkungen aus verripptem bzw. unverripptem Kunststoff herstellen lassen, wobei die Instrumententafelträgerstruktur für diese Verstärkungen sowie für dazwischen liegende Bereiche aus demselben Kunststoff gebildet ist, das heißt auch in einem einzigen Schritt zusammen herstellbar ist. Hierdurch gibt es sowohl Stabilitätsvorteile, als auch Vorteile in Sachen Kosten bzw. Gewicht gegenüber Hybridstrukturen, die beispielsweise eine Trägerhaut mit einem darunter befindlichen Kunststoff- bzw. Metallträgeraufbau benötigen.

Dieses integrale Konzept zeichnet sich außerdem dadurch aus, dass kein konventioneller Querträger ("Cross Car Beam") notwendig ist, der üblicherweise zwischen den A-Säulen eines Kraftfahrzeuges verläuft. Dieser klassische "Cross Car Beam" zeigt sowohl im Hinblick auf das Gewicht, als auch auf den Einbauraum Nachteile, so dass der Entfall dieses "Cross Car Beam" zusätzlichen Bauraum schafft.

Gegenüber dem bisherigen Stand der Technik ist es durchaus unüblich, eine (noch dazu möglicher Weise integrale) sehr starke Instrumententafelverstärkung an der Grenze der Instrumententafel zum Innenraum hin vorzusehen. Dies ist eher eine Entwicklung "gegen den Strom der üblichen Entwicklungen", da andere Konzepte üblicherweise (etwa motiviert durch den "Kopfaufschlagtest") den Bereich unmittelbar zum Innenraum hin sehr weich gestalten.

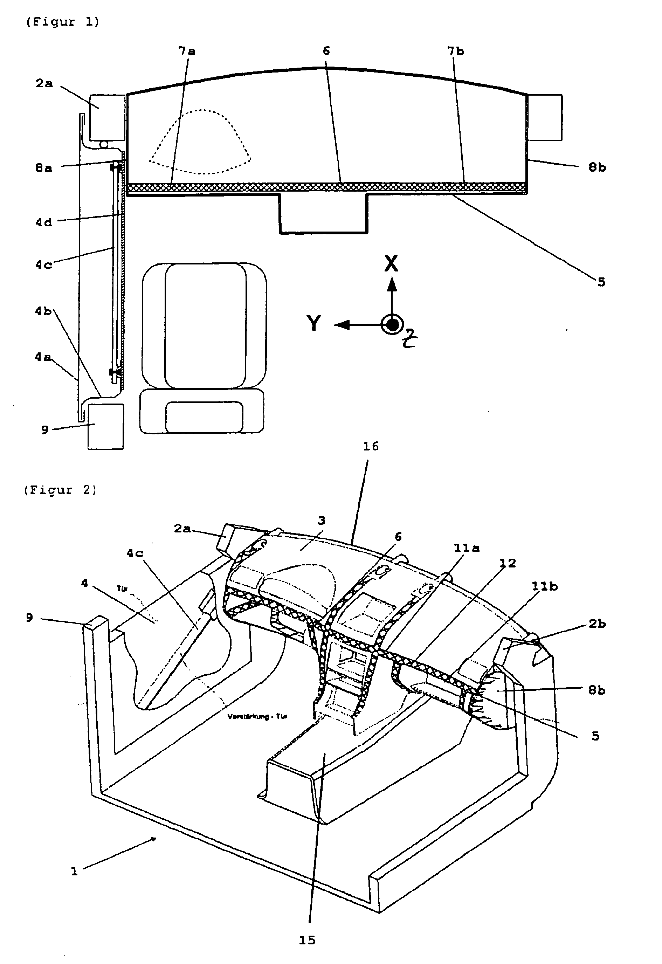

Die vorliegende Erfindung legt dagegen Wert auf eine Versteifung nahe zum Fahrzeuginnenraum, wobei diese Verstärkung primär in Y-Richtung (siehe auch Fig. 1 der folgenden Figurenbeschreibung) verlaufen soll. Eine entsprechende Versteifung auch in X-Richtung ist hiermit nicht zwingend verbunden, insofern kann die erfindungsgemäße Instrumententafelverstärkung hier eine mechanische Anisotropie zeigen. Selbst wenn diese Anisotropie nicht gegeben wäre, wäre allerdings eine entsprechend steife Struktur durchaus auch vorstellbar, da die Versteifungsstruktur vorzugsweise auf mittlerer Höhe, das heißt oberhalb der Knie von Fahrzeuginsassen, allerdings unterhalb des oberen Bereichs einer Instrumententafel erfolgt.

Die Anisotropie der Instrumententafelverstärkung kann hier gegebenenfalls durch Soll-Bruchstellen nochmals verstärkt werden, etwa im Bereich frontal vor den Sitzen der Fahrzeuginsassen.

Die erfindungsgemäße Instrumententafelverstärkung kann relativ hohe Kräfte aufnehmen.

So ist es durchaus möglich, dass in Y-Richtung auf die Instrumententafelverstärkung (beispielsweise auf den ersten Abschnitt 7a bzw. den zweiten Abschnitt-7b in Fig. 1 der folgenden Figurenbeschreibung) Kräfte von 5 Kilonewton, vorzugsweise von 10 Kilonewton, besonders vorzugsweise von 50 Kilonewton aufgebracht werden, ohne, dass diese brechen bzw. einknicken. Die Aufbringung einer Kraft bis 5 Kilonewton, vorzugsweise bis 10 Kilonewton in Y-Richtung (siehe Fig. 1 der folgenden Figurenbeschreibung) führt vorzugsweise nur zu einer maximalen Verschiebung des entsprechenden Abschnittes 7a bzw. 7b (siehe nachfolgende Figurenbeschreibung) von maximal 15 cm, vorzugsweise weniger als 10 cm, besonders vorzugsweise weniger als 5 cm in der X-Z-Ebene.

Mit der erfindungsgemäßen Instrumententafelverstärkung kann also, vorzugsweise in einem "integralen Instrumententafelkonzept" eine Versteifung der Instrumententafel erreicht und somit auch eine Verformung in Y-Richtung im Türbereich spürbar verringert werden. Hierbei ist insbesondere vorteilhaft, dass diese Verstärkung auch im Bereich zwischen A- und B-Säule erfolgen kann, vorzugsweise relativ stark zur B-Säule hin orientiert, so dass die Hebelverhältnisse einer starken Türverformung entgegen wirken und somit eine Gesamtversteifung der Fahrzeugzelle mit denkbar geringem Mehrgewicht ermöglicht wird.

Die Instrumententafelverstärkung, welche den Innenraum des Fahrzeugs zusätzlich gegen Deformationen aufgrund von seitlichen Krafteinwirkungen auf das Fahrzeug versteift, liegt gemäß der Erfindung auf einer Höhe zwischen A-Säulen und B-Säulen. Dadurch wird der gegen Deformationen empfindliche Bereich zwischen den A- und B-Säulen zusätzlich versteift.

Dadurch, dass die Instrumententafelverstärkung in dem Bereich der Kontur der Instrumententafel angeordnet ist, der den B-Säulen am nächsten liegt, also am tiefsten in den Innenraum des Fahrzeugs hineinragt, kann dieser Bereich zwischen den Säulen optimal abgestützt werden (d.h., die nicht abgestützte Strecke zwischen den Säulen wird verkürzt), ohne dass die Instrumententafel selbst zu tief in den Innenraum hinein verlagert werden muss.

Selbstverständlich ist es grundsätzlich auch möglich, die erfindungsgemäße Verstärkung nur einseitig, d.h., beispielsweise nur auf der Fahrerseite oder nur auf der Beifahrerseite, vorzusehen.

Vorteilhafte Weiterbildungen der Erfindung werden in den abhängigen Ansprüchen beschrieben.

Eine vorteilhafte Weiterbildung sieht vor, dass das Fahrzeug eine zwischen einer A-Säule und einer B-Säule angeordnete Vordertür enthält, wobei die Vordertür eine die Vordertür versteifende Türverstärkung aufweist und die Lage der Türverstärkung und Instrumententafelverstärkung derart aufeinander abgestimmt sind, dass im Falle einer seitlichen hohen Krafteinwirkung auf die Vordertür die Kraft von der Türverstärkung auf die Instrumententafelverstärkung geleitet wird.

Erfindungsgemäß bilden damit die Vordertür und die Instrumententafel ein gegen einen Seitenaufprall abgestimmtes zusammenwirkendes System. Im Falle eines Seitenaufpralls leitet die Türverstärkung die Kräfte auf die Instrumententafelverstärkung über, die über diese an weitere strukturstarke Komponenten, beispielsweise Mitteltunnel, gegenüber liegende A-Säule oder Windlauf zwecks Kompensation der Kräfte weitergegeben werden können.

Als Türverstärkungen eigenen sich beispielsweise Hohlrohre oder Streben mit T- oder U-förmigem Profil. Vorteilhafterweise erstreckt sich eine derartige Türverstärkung über die gesamte Breite der Tür. Vorteilhafterweise befindet sich die Instrumententafelverstärkung mit einer Tiefe von mindestens 60 mm zwischen den beiden Enden der Türverstärkung, um eine merkliche Verbesserung des Deformationsverhaltens zu erreichen.

Eine weitere vorteilhafte Weiterbildung der Erfindung sieht vor, dass sich zumindest ein Teilbereich der Türverstärkung und die Instrumententafelverstärkung quer zur Fahrzeuglängsrichtung überdecken.

In diesem Fall wird bei einem Seitenaufprall die Türverstärkung aufgrund der Überdeckung in Querrichtung mit der Instrumententafelverstärkung direkt auf die Instrumententafelverstärkung gedrückt, trotz eines möglichen Abstandes zwischen Türverstärkung und Instrumententafelverstärkung, welcher sich üblicherweise nicht vermeiden lässt (beispielsweise durch eine Türverkleidung oder durch eine Schaumschicht und Dekorschicht der Instrumententafel).

Gemäß einer weiteren vorteilhaften Weiterbildung sollte der Abstand zwischen der Türverstärkung und der Instrumententafelverstärkung so gering wie möglich gestaltet werden. Vorteilhaft ist hier ein maximaler Abstand von 80 mm, bevorzugt höchstens 60 mm.

Durch die Minimierung des Abstandes zwischen Türverstärkung und Instrumententafelverstärkung, welcher zunächst überbrückt werden muss, damit die Türverstärkung durch die Instrumententafelverstärkung zusätzlich abgestützt wird, wird verhindert, dass sich die Vordertür stark verformt, bevor der Versteifungseffekt der Instrumententafelverstärkung ausgenutzt wird.

Eine weitere vorteilhafte Weiterbildung der Erfindung sieht vor, dass die Instrumententafelverstärkung eine Rippenstruktur aufweist.

Eine Rippenstruktur ermöglicht es, durch Anpassung des Verlaufs der Rippen an die Belastungen, welche insbesondere im Falle eines Seitenaufpralles auf die Instrumententafel wirken, die auftretenden Kräfte direkt an Teile der Fahrzeugkarosserie, beispielsweise an Mitteltunnel, Windlauf oder gegenüberliegende A-Säule, weiterzuleiten. Dadurch, dass eine Rippenstruktur bezüglich deren Verlauf und deren Wandstärke sehr gezielt ausgelegt werden kann, lassen sich der Raumbedarf und das Gewicht einer derartigen Verstärkung auf ein Minimum reduzieren.

Vorteilhafterweise ist die Rippenstruktur auf der Rückseite eines zur Instrumententafel gehörenden, die Form vorgebenden und die mechanische Stabilität leistenden starren, flächigen Instrumententafelträger angeordnet, vorzugsweise mit dem Instrumententafelträger einstückig ausgebildet.

Eine Anordnung der Rippenstruktur unmittelbar an der Rückseite des Instrumententafelträgers ermöglicht es, die Rippenstruktur möglichst tief in den Innenraum hineinragend anzuordnen, ohne die sichtseitige Oberfläche der Instrumententafel zu beeinträchtigen.

Vorteilhafterweise weist die Rippenstruktur zumindest eine, vorzugsweise zumindest zwei flächige, im Wesentlichen in Fahrzeugquerrichtung verlaufende Stützwände auf.

Die Stützwände nehmen den Hauptteil der an den Außenseiten der Instrumententafel angreifenden Kräfte auf.

Diese Kräfte werden durch diese Verrippungen aufgenommen und durch geradlinige Kraftpfade direkt an Teile der Fahrzeugkarosserie weitergeleitet, beispielsweise an Mitteltunnel, Windlauf oder gegenüberliegende A-Säule.

Vorteilhafterweise erstreckt sich zumindest eine Stützwand, vorteilhafterweise beide Stützwände, über die ganze Breite der Instrumententafel. Auf diese Weise kann die Kraft beispielsweise bis zur gegenüber liegenden A-Säule geleitet werden.

Vorteilhafterweise weist die Rippenstruktur Querrippen auf, die zumindest zwischen den Stützwänden angeordnet sind.

Die Querrippen dienen hauptsächlich zur Stabilisierung der Stützwände, verhindern insbesondere, dass diese unter Druck ab- oder wegknicken.

Insbesondere sind im Falle von mindestens zwei nebeneinander liegenden Stützwänden benachbarte Stützwände durch Querrippen miteinander direkt verbunden.

Eine vorteilhafte Weiterbildung sieht vor, dass die Querrippen in Form von Kreuz- oder Zickzackverrippungen oder in Form einer Wabenstruktur ausgebildet sind.

Damit werden die Stützwände für den Fall des Seitenaufpralls ausreichend stabilisiert.

Die Verrippung ist vorzugsweise so dimensioniert, dass es im Falle einer Frontalkollision bei einem Kopf- oder Kniekontakt nicht zu unerlaubt hohen Beschleunigungswerten kommt. Dies kann durch eine die Höhe der Verrippung angepasste Biegesteifigkeit, durch entsprechende Sollbruchstellen innerhalb der Verrippung oder durch eine Positionierung der Verrippung schräg zur Instrumententafeloberfläche erfolgen, wodurch im letzteren Fall ein Ausknicken der Verstärkungsstruktur erfolgt.

Vorteilhafterweise bestehen Instrumententafelträger, Stützwände und Querrippen überwiegend oder vollständig aus demselben Material, vorzugsweise einem Polymer, vorzugsweise einem faserverstärktem Polymer, beispielsweise faserverstärktes Polypropylen.

Der Instrumententafelträger, Stützwände und Querrippen können insbesondere gemeinsam über einen vorzugsweise einzigen Spritzgussprozess oder durch einen Pressprozess hergestellt worden sein. Dabei ist es grundsätzlich möglich, während des Herstellungsprozesses Verstärkungseinlagen wie Endlosfasern oder Matten in das Werkzeug mit einzubringen.

Vorteilhafterweise ist die Rippenstruktur zumindest teilweise, vorzugsweise vollständig, in Entformungsrichtung der Instrumententafel bzw. des Instrumententafelträgers direkt auf der Instrumententafel positioniert, d.h., Stützwände und Querrippen haben eine gemeinsame Ausrichtung.

Dadurch, dass die Rippenstruktur in Entformungsrichtung positioniert ist, kann auf Schieber verzichtet werden, der Herstellungsprozess ist damit besonders kostengünstig.

Eine weitere vorteilhafte Weiterbildung sieht vor, dass die Instrumententafel eine selbsttragende Instrumententafel ist.

Eine derartige Instrumententafel benötigt nicht als Träger der Instrumententafel (und weitere in diesem Bereich vorgesehener Komponenten, beispielsweise Handschuhkasten usw.), den üblichen Querträger (in der Regel ein Metallrohr, welcher zwischen den beiden A-Säulen befestigt ist). Eine selbsttragende Instrumententafel erreicht eine ausreichende Steifigkeit und Stabilität durch entsprechende Strukturgebung oder Verstärkungen, insbesondere durch Rippenkonstruktionen. Nichtsdestotrotz kann natürlich auch ein üblicher Querträger vorgesehen sein.

Die Erfindung wird nun anhand eines Ausführungsbeispieles, welches durch mehrere Figuren dargestellt ist, näher erläutert.
- Figur 1: zeigt einen Fahrzeugausschnitt in einer Draufsicht gemäß einer erfindungsgemäßen Ausführungsform,
- Figur 2: zeigt eine Schrägansicht des gesamten Vor- derbereichs des Fahrzeuginnenraums, und
- Figur 3: zeigt einen Fahrzeugausschnitt in einer Draufsicht ohne horizontale Verstärkung und
- Figur 4: zeigt einen Fahrzeugausschnitt in einer Draufsicht mit erfindungsgemäßer horizonta- ler Verstärkung der Instrumententafel.

Figur 1 zeigt schematisch eine Draufsicht auf einen Ausschnitt eines Fahrzeuges gemäß einer erfindungsgemäßen Ausführungsform.

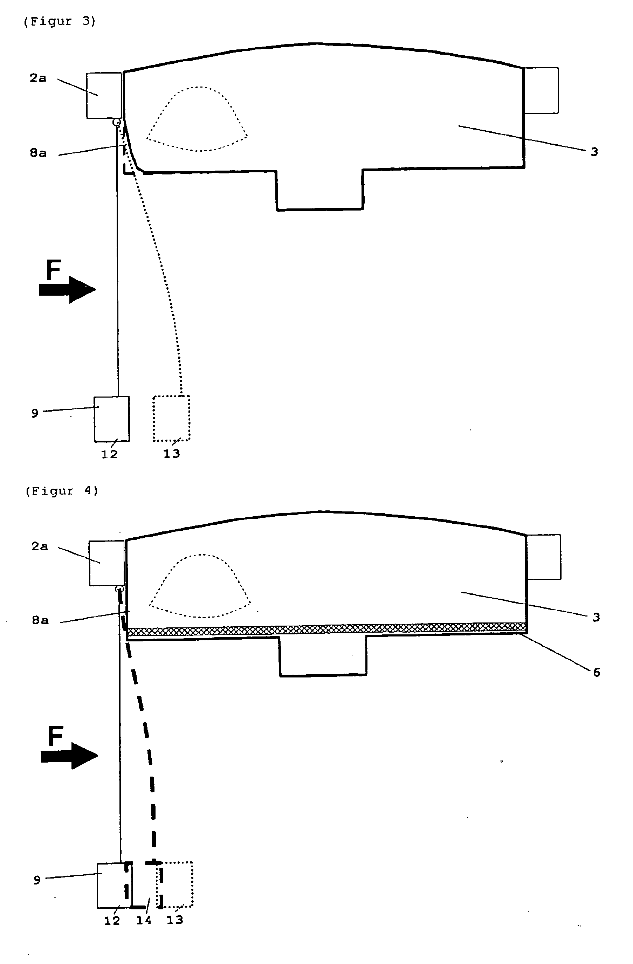

Das Fahrzeug enthält eine Fahrzeugkarosserie 1 mit zwei A-Säulen 2a, 2b und 2 B-Säulen 9 (siehe hierzu schon Figur 2), die einen Fahrzeuginnenraum begrenzen. Des Weiteren enthält das Fahrzeug eine zwischen den A-Säulen 2a, 2b im Innenraum angeordnete Instrumententafel 3. Im Bereich 5 der am weitesten zum Innenraum ausgerichteten Kontur der Instrumententafel 3, also in dem Bereich 5 der Kontur der Instrumententafel, der den B-Säulen 9 am nächsten liegt, ist eine Instrumententafelverstärkung 6 angeordnet. In Figur 1 und Figur 4 ist die Instrumententafelverstärkung 6 durch eine Kreuzschraffur, in Figur 2 mit Details wiedergegeben.

Die Instrumententafelverstärkung 6 erstreckt sich quer über die gesamte Breite der Instrumententafel 3. Insbesondere weist die Instrumententafelverstärkung 6 einen ersten Abschnitt 7a und einen zweiten Abschnitt 7b auf, wobei der erste und zweite Abschnitt 7a, 7b jeweils an der Außenseite 8a, 8b der Instrumententafel 3 beginnend sich zumindest über einen Teil der Instrumententafel 3 quer zur Fahrzeuglängsrichtung erstreckt, wodurch die Instrumententafel 3 gegen eine insbesondere an den Außenseiten 8a, 8b der Instrumententafel 3 angreifenden hohen Kraft, beispielsweise einer Kraft, die durch einen Seitenaufprall erzeugt wird, versteift ist.

Die Tür ist üblicherweise aus Türaußenblech 4a, Türinnenblech 4b, Türverstärkung 4c und Türverkleidung 4d aufgebaut. Die Instrumententafel ist so im Fahrzeug angeordnet, dass sie zur angrenzenden Tür in den Bereichen 8a und 8b derart überlappt, dass es im Falle einer seitlichen Kollision zu einem direkten Kraftfluss zwischen Türaußenblech 4a über Türverstärkung 4c, Türinnenblech 4b und Türverkleidung 4d zur Instrumententafelverstärkung 6 kommt.

Die Figur 2 zeigt Details der erfindungsgemäßen Ausführungsform.

Die Türverstärkung 4c ist üblicherweise als Pressformteil (z.B. als Hutprofil) oder, wie auch hier, als Hohlprofil (z.B. Rohrprofil) gestaltet und erstreckt sich im gezeigten Fall diagonal über die gesamte Breite der Vordertür beginnend von links unten an der B-Säule bis rechts oben an der A-Säule.

Die Instrumententafelverstärkung 6, hier gebildet durch eine Rippenkonstruktion, ist im Wesentlichen im Bereich des Scheitelpunktes 5 der Instrumententafel angeordnet, also dem Bereich, der den B-Säulen am nächsten liegt. Weitere Rippenstrukturen sind vorgesehen, um zum einen die Instrumententafel zu versteifen, und zum anderen Kräfte, welche auf die Rippenstruktur 6 wirken, effektiv auf andere Fahrzeugkomponenten, insbesondere auf gegenüberliegende A-Säule 2b, Mitteltunnel 15 und Windlauf 16 weiterzuleiten.

Die Lage der Türverstärkung 4c und der Instrumententafelverstärkung 6 ist derart aufeinander abgestimmt, dass im Falle einer seitlichen hohen Krafteinwirkung auf die Vordertür 4 die Kraft von der Türverstärkung 4c auf die Instrumententafelverstärkung 6 geleitet wird.

Um dies zu erreichen, überdecken sich der obere Abschnitt der Türverstärkung 4c und die sich in der Kontur der Instrumententafel 3 befindende Instrumententafelverstärkung 6 quer zur Fahrzeuglängsrichtung. Der Abstand zwischen Türverstärkung 4c und Instrumententafelverstärkung 6 beträgt vorteilhafterweise maximal 80 mm, bevorzugt jedoch weniger als 60 mm.

Die Instrumententafel weist in diesem Ausführungsbeispiel einen dreischichtigen Aufbau auf mit einem die mechanische Stabilität leistenden und die Form vorgebenden Träger, einer Schaumschicht und eine die Sichtseite der Instrumententafel bildende Dekorschicht. Alternativ wäre es ebenfalls möglich, auf Schaumschicht oder sogar Dekorschicht zu verzichten.

Die Rippenstruktur 6 weist zwei flächige, im Wesentlichen in Fahrzeugquerrichtung verlaufende Stützwände 11a, 11b auf, welche im Wesentlichen orthogonal zur Instrumententafeloberfläche orientiert sind und durch direkt mit diesen verbundenen Querrippen 12 voneinander beabstandet sind.

Die Querrippen 12 sind hier, wie Figur 2 zeigt, als Kreuzverrippung ausgeführt. Auch andere Verrippungen sind grundsätzlich möglich, insbesondere eine ZickZack-Verrippung.

Des Weiteren bestehen Instrumententafelträger, Stützwände und Querrippen aus demselben Material, hier ein glasfaserverstärktes thermoplastisches Polymer. Instrumententafelträger, Querrippen und Stützwände sind des Weiteren einstückig miteinander verbunden. Sie wurden in einem einzigen Spritgussprozess gemeinsam hergestellt. Die gesamte Rippenstruktur ist dabei in Entformungsrichtung ausgerichtet, so dass auf Schieber verzichtet werden konnte.

Figur 3 zeigt die Draufsicht einer herkömmlichen Instrumententafel 3 ohne horizontale Instrumententafelverstärkung 6. Die Tür ist hierbei schematisch dargestellt, wobei die Figur 3 sowohl die Position von Tür und B-Säule vor der Kollision 12 und nach der Kollision 13 zeugt. Ohne Instrumententafelverstärkung 6 kommt es dabei im Bereich der Überlappung zwischen Tür und Instrumententafel 8a zur einer Deformation beziehungsweise Zerstörung der Instrumententafel. Die Tür kann zwischen A-Säule 2 und B-Säule 9 ungehindert in den Innenraum eindringen.

Figur 4 zeigt die Draufsicht einer Instrumententafel mit einer erfindungsgemäßen Instrumententafelverstärkung 6, wobei hier, analog zu Figur 3, die Position von B-Säule und Tür vor der Kollision 12 und nach der Kollision 14 gezeigt wird. Durch die Instrumententafelverstärkung wird dabei die Tür zwischen A-Säule 2a und B-Säule 9 zusätzlich abgestützt, wodurch sich bei einer orthogonal zur Fahrzeuglängsrichtung angreifenden Kraft eine Verkürzung des Hebelarms ergibt. Dadurch wird die Eindringung von Tür und B-Säule reduziert (siehe hierzu Position der B-Säule nach Kollision ohne Instrumententafelverstärkung 13).

Mit der erfindungsgemäßen Instrumententafel wird ein weiterer Abstützpunkt zwischen der A-Säule 2a und der B-Säule 9 geschaffen, welcher den für Deformation anfälligen Bereich zwischen der A-Säule 2a und B-Säule 9 verkürzt und welcher einen Teil der Kräfte F aufnehmen kann, so dass die Deformation zwischen der A- und B-Säule in den Fahrzeuginnenraum hinein erheblich reduziert werden kann.

## Patentansprüche

1. Fahrzeug, enthaltend eine Fahrzeugkarosserie (1) mit zwei A-Säulen (2a, 2b) und zwei B-Säulen, die einen Fahrzeuginnenraum begrenzen, und eine zwischen den A-Säulen im Innenraum angeordnete Instrumententafel (3), wobei die Instrumententafel (3) eine Instrumententafelverstärkung (6) aufweist, wobei die Instrumententafelverstärkung (6) zumindest einen ersten (7a) und/oder einen zweiten Abschnitt (7b) aufweist, und der erste und/oder zweite Abschnitt jeweils an der Außenseite (8a, 8b) der Instrumententafel (3) beginnend sich zumindest über einen Teil der Instrumententafel (3) quer zur Fahrzeugslängsrichtung erstreckt zum Versteifen der Instrumententafel (3) gegen eine an den Außenseiten (8a, 8b) der Instrumententafel (3) angreifenden hohen Kraft, beispielsweise gegen eine Kraft, die durch einen Seitenaufprall erzeugt wird, wobei die Kontur der Instrumententafel einschließlich der Instrumententafelverstärkung (6) zumindest im Bereich der jeweiligen Außenseite (8a, 8b) der Instrumententafel (3) zumindest teilweise auf einer Höhe zwischen den A-Säulen (2a, 2b) und den B-Säulen liegt, **dadurch gekennzeichnet, dass** die Instrumententafelverstärkung in dem Bereich (5) der Kontur der Instrumententafel angeordnet ist, der am weitesten Richtung B-Säulen in den Fahrzeuginnenraum hineinragt.

2. Vorrichtung nach Anspruch 1, **dadurch gekennzeichnet, dass** das Fahrzeug eine zwischen einer A-Säule (2a, 2b) und einer B-Säule (9) angeordnete Vordertür (4) enthält, wobei die Vordertür (4) eine die Vordertür (4) versteifende Türverstärkung (4c) aufweist, und Lage der Türverstärkung (4c) und Instrumententafelverstärkung (6) derart aufeinander abgestimmt sind, dass im Falle einer seitlichen hohen Krafteinwirkung (F) auf die Vordertür (4) die Kraft von der Türverstärkung (4c) auf die Instrumententafelverstärkung (6) geleitet wird.

3. Vorrichtung nach Anspruch 2, **dadurch gekennzeichnet, dass** sich zumindest ein Teilbereich der Türverstärkung (11) und die Instrumententafelverstärkung (6) quer zur Fahrzeugslängsrichtung überdecken.

4. Vorrichtung nach einem der Ansprüche 2 bis 3, **dadurch gekennzeichnet, dass** die Türverstärkung (11) und die Instrumententafelverstärkung (6) einen maximalen Abstand von höchstens 80 mm, vorzugsweise höchstens 60 mm, aufweisen.

5. Vorrichtung nach einem der vorhergehenden Ansprüche, **dadurch gekennzeichnet, dass** die Instrumententafelverstärkung (6) eine Rippenstruktur aufweist.

6. Vorrichtung nach Anspruch 5, **dadurch gekennzeichnet, dass** sich die Rippenstruktur durchgehend über die gesamte Breite der Instrumententafel (3) erstreckt.

7. Vorrichtung nach einem der Ansprüche 5 bis 6, **dadurch gekennzeichnet, dass** die Rippenstruktur zumindest eine, vorzugsweise mindestens zwei flächige, im wesentlichen in Fahrzeugquerrichtung verlaufende Stützwände (11a, 11b) aufweist.

8. Vorrichtung nach Anspruch 7, **dadurch gekennzeichnet, dass** die Rippenstruktur zur mechanischen Stabilisierung der Stützwände (11a, 11b) Querrippen (12) aufweist, die zumindest zwischen den Stützwänden (11a 11b) angeordnet sind.

9. Vorrichtung nach Anspruch 8, **dadurch gekennzeichnet, dass** die Querrippen (12) in Form von Kreuz- oder Zickzackverrippungen ausgebildet sind.

10. Vorrichtung nach einem der vorhergehenden Ansprüche, **dadurch gekennzeichnet, dass** die Instrumententafel (3) eine selbsttragende Instrumententafel ist.

## Claims

1. A vehicle, containing a vehicle body (1) with two A-pillars (2a, 2b) and two B-pillars, which define an interior of the vehicle, and a dashboard (3) arranged between the A-pillars in the interior, the dashboard (3) having a dashboard reinforcement (6), the dashboard reinforcement (6) having at least one first (7a) and/or one second section (7b), and the first and/or second section, beginning in each case on the outside (8a, 8b) of the dashboard (3), at least extending over part of the dashboard (3) transversely to the longitudinal direction of the vehicle in order to reinforce the dashboard (3) against a high force which acts on the outsides (8a, 8b) of the dashboard (3), for example against a force produced by a side impact, the contour of the dashboard including the dashboard reinforcement (6), at least in the region of the respective outside (8a, 8b) of the dashboard (3), lying at least partially at one height between the A-pillars (2a, 2b) and the B-pillars, **characterised in that** the dashboard reinforcement is arranged in the region (5) of the contour of the dashboard which projects furthest into the interior of the vehicle in the direction of the B-pillars.

2. A device according to Claim 1, **characterised in that** the vehicle contains a front side door (4) arranged between an A-pillar (2a, 2b) and a B-pillar (9), the front side door (4) having a door reinforcement (4c) which reinforces the front side door (4), and the positions of the door reinforcement (4c) and dashboard reinforcement (6) being matched to each other such that in the case of a lateral high action of force (F) on the front side door (4) the force is guided from the door reinforcement (4c) on to the dashboard reinforcement (6).

3. A device according to Claim 2, **characterised in that** at least a partial region of the door reinforcement (11) and the dashboard reinforcement (6) overlap transversely to the longitudinal direction of the vehicle.

4. A device according to one of Claims 2 to 3, **characterised in that** the door reinforcement (11) and the dashboard reinforcement (6) have a maximum spacing of at most 80 mm, preferably at most 60 mm.

5. A device according to one of the preceding claims, **characterised in that** the dashboard reinforcement (6) has a rib structure.

6. A device according to Claim 5, **characterised in that** the rib structure extends continuously over the entire width of the dashboard (3).

7. A device according to one of Claims 5 to 6, **characterised in that** the rib structure has at least one, preferably at least two, planar supporting walls (11a, 11b) extending substantially in the transverse direction of the vehicle.

8. A device according to Claim 7, **characterised in that** the rib structure has transverse ribs (12) for mechanical stabilisation of the supporting walls (11a, 11b), which ribs are arranged at least between the supporting walls (11a, 11b).

9. A device according to Claim 8, **characterised in that** the transverse ribs (12) are in the form of crossed or zigzag ribbing.

10. A device according to one of the preceding claims, **characterised in that** the dashboard (3) is a self-supporting dashboard.

## Revendications

1. Véhicule, contenant une carrosserie de véhicule (1) avec deux colonnes A (2a, 2b) et deux colonnes B, qui délimitent un espace intérieur de véhicule, et un tableau de bord (3) disposé, entre les colonnes A, dans l'espace intérieur, dans lequel le tableau de bord (3) présente un renfort (6) du tableau de bord, dans lequel le renfort (6) du tableau de bord présente au moins une première section (7a) et/ou une seconde section (7b) et la première et/ou la seconde section, débutant respectivement sur le côté externe (8a, 8b) du tableau de bord (3), s'étendent, transversalement au sens longitudinal du véhicule, sur au moins une partie du tableau de bord (3) de manière à rigidifier le tableau de bord pour le munir contre une force élevée attaquant sur les côtés externes (8a, 8b) du tableau de bord (3), par exemple contre une force qui est générée par un choc latéral, dans lequel le contour du tableau de bord avec le renfort du tableau de bord (6) compris se trouve au moins dans la zone du côté externe respectif (8a, 8b) du tableau de bord (3), à une hauteur située au moins en partie entre les colonnes A (2a, 2b) et les colonnes B, **caractérisé en ce que** le renfort du tableau de bord est disposé dans la zone (5) du contour du tableau de bord, laquelle s'avance, en direction des colonnes B, le plus loin dans l'espace intérieur du véhicule.

2. Dispositif selon la revendication 1, **caractérisé en ce que** le véhicule contient une porte avant (4) disposée entre une colonne A (2a, 2b) et une colonne B (9), dans lequel la porte avant (4) présente un renfort de la porte (4c) rigidifiant la porte avant (4) et la position du renfort de la porte (4c) et du renfort (6) du tableau de bord sont accordés l'un à l'autre de sorte que sous l'effet d'une force élevée (F) agissant latéralement sur la porte avant (4), la force soit redirigée du renfort de la porte (4c) sur le renfort (6) du tableau de bord.

3. Dispositif selon la revendication 2, **caractérisé en ce qu'**au moins une zone partielle du renfort de la porte (11) et le renfort (6) du tableau de bord se recouvrent transversalement au sens longitudinal du véhicule

4. Dispositif selon l'une quelconque des revendications 2 à 3, **caractérisé en ce que** le renfort de la porte (11) et le renfort (6) du tableau de bord se trouvent à une distance de 80 mm au maximum, de préférence de 60 mm au maximum, l'un de l'autre.

5. Dispositif selon l'une quelconque des revendications précédentes, **caractérisé en ce que** le renfort (6) du tableau de bord présente une structure nervurée.

6. Dispositif selon la revendication 5, **caractérisé en ce que** la structure nervurée s'étend en continu sur toute la largeur du tableau de bord (3).

7. Dispositif selon l'une quelconque des revendications 5 à 6, **caractérisé en ce que** la structure nervurée présente au moins une, de préférence au moins deux parois de support surfaciques (11a, 11b) au tracé sensiblement transversal au sens longitudinal du véhicule

8. Dispositif selon la revendication 7, **caractérisé en ce que** la structure nervurée présente, pour la stabilisation mécanique des parois de support (11a, 11b), des nervures transversales (12) qui sont disposées au moins entre les parois de support (11a, 11b).

9. Dispositif selon la revendication 8, **caractérisé en ce que** les nervures transversales (12) se présentent sous la forme de nervures cruciformes ou en zigzag.

10. Dispositif selon l'une quelconque des revendications précédentes, **caractérisé en ce que** le tableau de bord (3) est un tableau de bord autoportant.
